# EUROPÄISCHE PATENTSCHRIFT

(11) **EP 4 474 754 B1**
(45) Veröffentlichungstag und Bekanntmachung des Hinweises auf die Patenterteilung: **01.10.2025**
(21) Anmeldenummer: 23177930.7
(22) Anmeldetag: 07.06.2023
(51) Int. Cl.: F41H 7/04

(54) **VERFAHREN ZUR HERSTELLUNG EINES AUS MEHREREN EINZELPROFILEN GEBILDETEN SCHUTZELEMENTES ZUR PANZERUNG EINES KRAFTFAHRZEUGES SOWIE MIT DEM VERFAHREN HERGESTELLTES SCHUTZELEMENT**
METHOD FOR PRODUCING A PROTECTIVE ELEMENT FORMED FROM SEVERAL INDIVIDUAL PROFILES FOR ARMOURING A MOTOR VEHICLE AND PROTECTIVE ELEMENT PRODUCED BY SAID METHOD
PROCÉDÉ DE FABRICATION D'UN ÉLÉMENT DE PROTECTION CONSTITUÉ DE PLUSIEURS PROFILÉS INDIVIDUELS POUR LE BLINDAGE D'UN VÉHICULE AUTOMOBILE ET ÉLÉMENT DE PROTECTION FABRIQUÉ SELON CE PROCÉDÉ

(43) Veröffentlichungstag der Anmeldung: 11.12.2024
(73) Patentinhaber: Benteler Automobiltechnik GmbH, 33102 Paderborn (DE)
(72) Erfinder: Rüsing, Christian, 33106 Paderborn (DE); Schomberg, Dennis, 33813 Oerlinghausen (DE); Höcker, Frank, 49479 Ibbenbüren (DE)
(74) Vertreter: Ksoll, Peter

(56) Entgegenhaltungen:
- DE-A1- 102007 039 998
- DE-A1- 102017 102 547
- US-A- 4 412 122

## Beschreibung

Die Erfindung betrifft ein Verfahren zur Herstellung eines aus mehreren Einzelprofilen gebildeten Schutzelementes zur Panzerung eines Kraftfahrzeugs nach dem Oberbegriff des Patentanspruchs 1. Ferner betrifft die Erfindung ein nach diesem Verfahren hergestelltes Schutzelement nach dem Patentanspruch 13.

Derartige Schutzelemente beziehungsweise Panzerungselemente eines Kraftfahrzeugs werden bei militärischen Kraftfahrzeugen sowie auch zivilen Schutzfahrzeugen für eine Panzerung des Fahrzeugs verwendet, um gegen ballistische Einwirkungen sowie Detonationseinwirkungen geschützt zu sein. Die Herstellung solcher Schutzelemente für Kraftfahrzeuge erfolgt zum einen vielfach aus Formteilen, die aus ebenen Platinen beziehungsweise Blechen geformt werden. Bei derartigen Formteilen entstehen umformtechnisch bedingt allerdings Biegeradien, die für die Schutzfunktion im Kraftfahrzeug negativ sein können. Durch das Biegen verringert sich nämlich die Schutzfläche, da an den Biegeradien Projektile abgelenkt werden und ungewollt in das Fahrzeuginnere eindringen können. Dabei gilt zudem, je kleiner der Biegeradius, also je größer die Biegung selbst ist, umso geringer wird die Werkstoffdicke an der Biegestelle des Werkstücks. Aber auch bereits bei großen Biegeradien, also bei geringer Biegung, erfolgt eine Festigkeitsabnahme des Werkstücks. Insofern ist die Verwendung solcher Formteile für Schutzelemente in Kraftfahrzeugen nicht hinreichend, um die Schutzfunktion des Schutzelementes, insbesondere im Bereich der Biegung, sicherstellen zu können.

Zum anderen lassen sich derartige Schutzelemente aus ebenen oder gebogenen Zuschnitten beziehungsweise Einzelprofilen aus bereits gehärtetem Schutzstahl herstellen. Dabei werden diese Zuschnitte beziehungsweise Einzelprofile miteinander verschweißt. Aufgrund der hohen Härte, die solche Schutzstähle aufweisen, ist die Formgebung allerdings eingeschränkt. Zudem kommt es in der Schweißnaht beziehungsweise in der Wärmeeinflusszone zwischen den einzelnen Zuschnitten beziehungsweise Einzelprofilen zu einem Verlust der Härte und damit der Schutzwirkung des herzustellenden Schutzelementes.

Aus der DE 10 2017 102 547 A1 ist ein Schutzelement nach dem Oberbegriff des Patentanspruchs 13 bekannt, welches bereits sehr gute Schutzwirkung aufweist. Bisher werden die Einzelprofile mit austenitischem Zusatzwerkstoff nach dem Härten zu dem Schutzelement verschweißt. Durch die durch den Schweißprozess bedingte Wärmeeinflusszone wird allerdings das Schutzelement in diesem Bereich angelassen und ist nicht mehr beschusssicher. Die weiche austenitische Schweißnaht ist ebenfalls nicht beschusssicher. Ein austenitischer Schweißzusatzwerkstoff wird jedoch benötigt, um die Spannungen beim Schweißen zu kompensieren.

Es ist daher Aufgabe der Erfindung, ein Verfahren zur Herstellung eines aus mehreren Einzelprofilen gebildeten Schutzelementes zur Panzerung eines Kraftfahrzeuges zur Verfügung zu stellen, wobei das Schutzelement über seine gesamte Ausdehnung die notwendige Schutzwirkung aufrechterhält, ohne in bestimmten Bereichen während der Herstellung eine Schwächung und damit Einbußen hinsichtlich des Schutzvermögens zu erfahren. Weiterhin ist es auch Aufgabe der Erfindung ein derartiges Schutzelement zur Verfügung zu stellen.

Verfahrensmäßig wird die Aufgabe gelöst durch ein Verfahren zur Herstellung eines aus mehreren Einzelprofilen gebildeten Schutzelementes zur Panzerung eines Kraftfahrzeugs mit allen Merkmalen des Patentanspruchs 1. Hinsichtlich des Schutzelementes wird die Aufgabe gelöst durch ein Schutzelement mit allen Merkmalen des Patentanspruchs 13. Vorteilhafte Ausgestaltungen der Erfindung finden sich in den Unteransprüchen.

Das erfindungsgemäße Verfahren zur Herstellung eines aus mehreren Einzelprofilen gebildeten Schutzelementes zur Panzerung eines Kraftfahrzeugs, bei dem wenigstens zwei der Einzelprofile benachbart zueinander angeordnet sind, weist folgenden Verfahrensschritte auf:
a) Bereitstellen der Einzelprofile aus einer gleichen Stahllegierung oder aus verschiedenen Stahllegierungen,
b) Verschweißen der Einzelprofile zu einer Vorform des Schutzelementes,
c) Erwärmen der Vorform auf eine Temperatur, die höher ist als die Austenitisierungstemperatur der Stahllegierung mit der höheren Austenitisierungstemperatur,
d) Einlegen der Vorform in ein Warmformwerkzeug,
e) Endumformen der Vorform zu dem Schutzelement in dem Warmformwerkzeug,
   wobei das Schutzelement in einem abschließenden Verfahrensschritt gehärtet wird, dadurch gekennzeichnet, dass das Verschweißen in Schritt b) unter Bildung wenigstens einer ersten Schweißnaht und einer zweiten Schweißnaht zwischen zwei Einzelprofilen erfolgt, wobei die erste Schweißnaht weiter entfernt von einer beschusszugewandten Seite der Einzelprofile liegt als die zweite Schweißnaht,
   wobei beim Schweißen der näher an der beschusszugewandten Seite der Einzelprofile liegenden wenigstens einen Schweißnaht ein Schweißzusatzsoff verwendet, der eine höhere Härte aufweist als ein Schweißzusatzstoff, der beim Schweißen der wenigstens einen Schweißnaht verwendet wird, die weiter weg von der beschusszugewandten Seite der Einzelprofile verwendeter Schweißzusatzstoff liegt.

Besonders vorteilhaft bei dem erfindungsgemäßen Verfahren zur Herstellung eines aus mehreren Einzelprofilen gebildeten Schutzelementes ist es nicht nur, dass im Umformschritt bei der Endumformung kein Biegeumformen mehr stattfinden muss, um die ursprünglichen Einzelprofile in dem gewünschten Winkel ungleich 180° gegeneinander auszurichten. In dieser Grundform des herzustellenden Schutzelementes sind die Einzelprofile bereits in dem gewünschten Winkel zueinander ausgerichtet und miteinander verschweißt. Somit werden beim Endumformen im Bereich der Schweißnähte keine Biegeradien erzeugt, die eine Schwächung des herzustellenden Schutzelementes und damit der Schutzwirkung desselben bedeuten würden. Insbesondere im Bereich der Schweißnähte zwischen den Einzelprofilen des Schutzelementes, wo das nunmehr eigentliche Endumformen stattfindet, können somit durch Verwendung von zwei Schweißnähten besonders scharfe Kanten unter Verzicht von bei Biegeprozessen beim Endumformen entstehende Biegeradien zur Anordnung der Einzelprofile zueinander hergestellt werden. Derartige scharfe Kanten bieten für erfindungsgemäße Schutzelemente eine deutlich höhere Schutzwirkung als herkömmliche Biegeradien der bekannten Schutzelemente, da die Fläche der Biegung im Bereich der Schweißnähte und somit die Wahrscheinlichkeit einer Ablenkung eines Projektils im Bereich der scharfen Kanten deutlich verringert ist. Der abschließende Verfahrensschritt, in dem das Schutzelement gehärtet wird, reduziert die Größe der durch das Schweißen erzeugte Wärmeeinflusszonen benachbart zu den Schweißnähten. Dadurch ergibt sich eine deutlich verbesserte Beschusssicherheit bis nah an die Schweißnähte. Wird die Lage der Schweißnaht nun in der Geometrie des Bauteils bezüglich des Beschusswinkels berücksichtigt, ergibt sich auch mit einer weichen Schweißnaht eine deutlich verbesserte Beschusssicherheit. Dieses kann zusätzlich noch durch eine Kombination von weichen und harten Schweißnähten verbessert werden. Auf der Beschussseite (Strike Face) kann ein harter Zusatzwerkstoff verwendet werden, wobei rückseitig eine weiche Verbindungsschweißnaht aufgebracht werden kann. Daraus ergibt sich beschussseitig nach dem Endformen und Presshärten ein relativ gleichmäßiger Härteverlauf ohne relevante Schwachstelle. Durch diese Maßnahme wird nochmals die Beschusssicherheit und somit die Schutzwirkung des Schutzelementes, insbesondere im Bereich der Schweißnähte, erhöht.

Durch das Erwärmen der Vorform auf eine Temperatur, die höher ist als die Austenitisierungstemperatur der Stahllegierung mit der höheren Austenitisierungstemperatur werden innerhalb der für die Einzelprofile beziehungsweise das Schutzelement verwendeten Stählen beziehungsweise Metallen, die zur Panzerung ebenfalls eingesetzt werden können, wie beispielsweise Magnesiumlegierungen, Aluminiumlegierungen und Titanlegierungen, zu einer Strukturänderung innerhalb des Metalls. Insbesondere erfolgt hierbei eine kubisch flächenzentrierte Modifikation der Kristallstruktur.

Hierdurch ist es möglich, dass die Vorform des Schutzelementes nach dem Erwärmen auf Austenitisierungstemperatur vergütet wird, wobei dieses Vergüten vorzugsweise in einem gekühlten Umformungswerkzeug nach oder während des Endumformens durch Warmformen und Presshärten erfolgt. Das Vergüten stellt eine kombinierte Wärmebehandlung dar, welche aus einem Härten und einem anschließenden Anlassen besteht.

Im Allgemeinen ist bei einem derartigen Vergüten zwar der Werkstoffstahl gemeint, jedoch ist ein derartiges Vergüten auch bei Nichteisenmetallen wie beispielsweise Magnesiumlegierungen, Aluminiumlegierungen und Titanlegierungen üblich, wobei eine thermische Gefügebildung und - änderung erfolgt. Zum Härten ist dabei zunächst ein Aufheizen der Grundform des Schutzelementes über die Austenitisierungstemperatur notwendig. Nachfolgend erfolgt ein Abschrecken, also die schnelle Abkühlung des nunmehr endumgeformten Schutzelementes. Hierbei wird das dadurch entstehende Gefüge durch die Abschreckgeschwindigkeit beeinflusst und ist durch den Fachmann entsprechend einstellbar. Nach dem Abschrecken ist eine sofortige Anlassstufe von Vorteil. Hierbei wird das bei der Härtung eines Stahls entstandene, spröde Tetragonalmartensit unter Ausscheidung von feinen Karbiden in das kubische Martensitgefüge umgewandelt. Dieses besitzt ein geringeres Volumen und sorgt für eine Entspannung des Korngitters des Kristalls und beseitigt die sogenannte Glashärte des Werkstoffes. Insofern lassen sich durch diesen Verfahrensschritt besonders wirksame Schutzelemente mit entsprechend guter Schutzwirkung für ein Kraftfahrzeug herstellen.

In vorteilhafter Weise lassen sich durch das erfindungsgemäße Verfahren die Vorteile des Werkzeugvergütens, insbesondere der komplexen Formgebung und homogenen Härteverteilung im Bauteil, mit den Vorteilen der geschweißten Lösung und der scharfkantigen Ausführung von Strukturen kombinieren. Auch wenn damit ein zusätzlicher Herstellungsschritt verbunden ist, überwiegen die durch den synergetischen Effekt erzielten Vorteile hinsichtlich der Schutzwirkung der mit dem erfindungsgemäßen Verfahren hergestellten Schutzelemente.

In einer ersten Ausgestaltung der Erfindung ist es vorgesehen, dass das Verschweißen der Einzelprofile zu einer Vorform des Schutzelementes unter Bildung wenigstens einer Schweißnaht auf der beschusszugewandten Seite der Einzelprofile und wenigstens einer Schweißnaht auf der beschussabgewandten Seite der Einzelprofile erfolgt.

Alternativ kann es natürlich auch vorgesehen sein, dass das Verschweißen der Einzelprofile zu einer Vorform des Schutzelementes unter Bildung der beiden Schweißnähte auf der beschusszugewandten Seite der Einzelprofile oder auf der beschussabgewandten Seite der Einzelprofile erfolgt.

Nach einer weiteren vorteilhaften Ausgestaltung der Erfindung ist es vorgesehen, dass beim Schweißen und Ausbilden der Schweißnähte ein austenitischer Zusatzstoff verwendet wird. Diese austenitischen Zusatzstoffe bewirken wie bereits erwähnt, dass die Spannungen beim Schweißen kompensiert werden. Zwar sind solche Zusatzstoffe an sich nicht beschusssicher, doch durch das erfindungsgemäße abschließende Harten und die Ausbildung von Kanten und die Vermeidung von Biegeradien, wird die Schutzwirkung im Bereich der Schweißnähte maximiert.

Auch dadurch, dass beim Schweißen der Schweißnaht auf der beschusszugewandten Seite der Einzelprofile ein Schweißzusatzstoff verwendet wird, der eine Härte von größer als 550 HV aufweist, wird nochmals die Beschusssicherheit und damit die Schutzwirkung des erfindungsgemäßen Schutzelementes erhöht. Die Härte von größer 550 HV kann der Schweißzusatzstoff bereits nach dem Schweißen aufweisen. Allerdings sollte auch dem abschließenden Umformen und Härten der Schweißzusatzstoff eine Härte von größer 550 HV aufweisen.

Auch die Verwendung eins duktilen Schweißzusatzstoff beim Schweißen der Schweißnaht auf der beschussabgewandten Seite der Einzelprofile erhöht nochmals die Beschusssicherheit und damit die Schutzwirkung des erfindungsgemäßen Schutzelementes, da dadurch die Wahrscheinlichkeit eines Bruches der Schweißnaht reduziert wird.

In einer weiteren Ausgestaltung der Erfindung ist es vorgesehen, dass miteinander zu verschweißende Einzelprofile vor dem Verschweißen im Bereich der zu bildenden Schweißnähte in einem Winkel ungleich 180° angeordnet werden. Durch diese Maßnahme ist es in einfacher Weise ermöglicht, Schutzelemente wie beispielsweise A-, B- oder C-Säule, eine Stirnwand, ein Schweller, eine Luke, ein Radhaus, ein Fahrzeugboden oder dergleichen herzustellen, die vielfach in Kraftfahrzeugen Verwendung finden. Bevorzugt beträgt der Winkel zwischen zwei Einzelprofilen 45 bis 150 Grad, insbesondere 90 bis 120 Grad.

Vorteilhaft ist zudem, wenn die Einzelprofile als warmgeformte, pressgehärtete Profile bereitgestellt werden, die durch diese entsprechende Vorbehandlung bereits eine deutlich bessere Beschusssicherheit und somit auch eine verbesserte Schutzwirkung aufweisen.

Auch die Bereitstellung wenigstens eines Einzelprofils mit einen Biegeradius, der größer ist als die doppelte Wandstärke des Einzelprofils bietet eine bessere Beschusssicherheit und damit auch verbesserte Schutzwirkung als Einzelprofile mit kleineren Biegeradien.

Bei dem erfindungsgemäßen Verfahren kann das Endumformen der Grundform des Schutzelementes zu dem Schutzelement im Wesentlichen unter Verzicht auf ein herkömmliches Biegeumformen erfolgen. Hierdurch werden die beim herkömmlichen Biegeumformen entstehenden kleinen Biegeradien vermieden, die eine Schwächung des Schutzelementes und damit der Schutzwirkung des Schutzelementes bedeuten würden, wobei natürlich das Schutzelement in dem Umformungswerkzeug auch noch gegebenenfalls Biegeprozessen ausgesetzt wird. Allerdings werden bei diesen Biegeprozessen keine scharfen Kanten, also keine kleinen Biegeradien mehr erzeugt. Insofern erhält man die aus dem Werkzeugvergüten bekannten Vorteile der komplexen Formgebung und homogenen Härteverteilung innerhalb des gesamten Schutzelementes bei gleichzeitiger Ausbildung der scharfkantigen Strukturen im Bereich der Schweißnähte zweier direkt benachbarter und in einem Winkel ungleich 180° zueinander angeordneter Einzelprofile des Schutzelementes.

In einer besonderen Ausführung der Erfindung findet dabei eine Umformung der Vorform des Schutzelementes nur im Bereich der Schweißnähte und gegebenenfalls den Schweißnähten direkt benachbarten Bereichen unter Bildung von scharfen Kanten statt. Andere Bereiche der Vorform werden hierbei beim Endumformen nicht mehr umgeformt.

Dabei hat es sich erfindungsgemäß besonders bewährt, dass das Endumformen der Vorform des Schutzelementes zu dem Schutzelement im Wesentlichen nur durch ein Biegen im Bereich der Schweißnähte zwischen zwei direkt benachbarten und in einem Winkel ungleich 180° zueinander angeordneten Einzelprofile beziehungsweise in Grenzbereichen dieser Einzelprofile zu den Schweißnähten erfolgt. Hierdurch ist es möglich, die Vorform im Wesentlichen nur im Bereich dieser Schweißnähte umzuformen, wobei auf eine Materialschwächung in diesem Bereich verzichtet wird. Insbesondere wird dadurch die Schutzwirkung im Bereich der Schweißnähte gegenüber dem aus dem Stand der Technik bekannten Schutzelemente deutlich erhöht, ohne dass eine wesentliche Materialschwächung im Bereich der Schweißnähte auftritt.

Nach einem weiteren Gedanken der Erfindung ist es vorgesehen, dass die Einzelprofile aus Stahlblechen, insbesondere walzharten Stahlblechen, oder aus gehärteten Stahlblechen bereitgestellt werden.

Dabei ist es möglich, dass die Einzelprofile als aus einer ebenen Blechplatine hergestellte Einzelprofile bereitgestellt werden.

Auch ist es möglich, dass die Einzelprofile als aus bereits gehärtetem Stahl, insbesondere gehärtetem Schutzstahl, hergestellten Einzelprofilen bereitgestellt werden.

Bei all diesen Möglichkeiten der Ausgangsmaterialien der Einzelprofile ist es gewährleistet, dass die Einzelprofile mit für die Schutzwirkung ausreichenden Schutzeigenschaften bereitgestellt werden und somit bereits ohne eine Nachbearbeitung die erforderlichen Schutzeigenschaften für die Verwendung als Schutzelement in einem Kraftfahrzeug, insbesondere in einem gepanzerten militärischen Kraftfahrzeug als auch in einem gepanzerten zivilen Schutzfahrzeug, aufweisen.

Nach einem weiteren besonders vorteilhaften Gedanken der Erfindung hat es sich bewährt, verschiedenste Schweißverfahren zum Verschweißen der Einzelprofile zu verwenden. Darunter fallen insbesondere Laserschweißen, Plasmaschweißen, Lichtbogenschweißen mit Stabelektrode oder auch Schutzgasschweißen mit Zusatzdraht, wobei Stabelektrode oder Zusatzdraht im Wesentlichen eine analoge Legierungszusammensetzung haben wie die Einzelprofile.

Bei Verwendung von Laserschweißen oder Plasmaschweißen erfolgt dies in der Regel als Stumpfstoßschweißen. Insofern hat die entstehende Schweißnaht hierbei im Wesentlichen bereits die analoge Legierungszusammensetzung wie die Einzelprofile selbst. Aber auch bei der Verwendung von Schutzgasschweißen mit Zusatzdraht, wobei dieser Zusatzdraht im Wesentlichen eine analoge Legierungszusammensetzung wie die Einzelprofile aufweist, wird eine im Wesentlichen homogene Schweißnaht erzeugt, die in ihrer Zusammensetzung im Wesentlichen der Legierungszusammensetzung der Einzelprofile entspricht. Insbesondere ist bei den verwendeten Schweißverfahren darauf zu achten, dass bei der Verwendung von Zusatzmittel, wie beispielsweise Elektroden oder auch Drähten in dem herzustellenden Schutzelement, diese ferritisch ausgebildet sein müssen, damit eine Gefügeumwandlung stattfinden kann.

Durch das Vergüten nach dem entsprechenden Schweißvorgang entsteht daher ein nahezu homogener Übergang zwischen den Einzelprofilen, sodass das Schutzelement in seiner Gänze eine im Wesentlichen homogene Legierungszusammensetzung, auch im Bereich der Schweißnähte, aufweist. Beim Endumformen werden die Schweißnähte dann zu den entsprechend scharfen Kanten umgeformt, ohne dass dabei für die Schutzwirkung des Schutzelementes ungünstige Biegeprozesse zur Anwendung kommen müssen.

Weiterhin hat es sich besonders bewährt, dass als Schutzelement eine A-, B- oder C-Säule, eine Stirnwand, ein Schweller, eine Luke, ein Radhaus, ein Fahrzeugboden oder dergleichen hergestellt wird.

Selbständig geschützt sein soll nach der Erfindung auch ein Schutzelement für ein Kraftfahrzeug, wobei die Härte der auf der näher an der beschusszugewandten Seite der Einzelprofile liegenden Schweißnaht größer ist als die Härte der näher an der beschussabgewandten Seite der Einzelprofile liegenden Schweißnaht, wobei die Härte der näher an der beschusszugewandten Seite der Einzelprofile liegenden Schweißnaht und die Härte der ursprünglichen Einzelprofile um nicht mehr als 25% variieren, wobei die Härte der näher an der beschusszugewandten Seite der Einzelprofile liegenden Schweißnaht mindestens 550HV beträgt.

Weitere Ziele, Vorteile, Merkmale und Anwendungsmöglichkeiten der vorliegenden Erfindung ergeben sich aus der nachfolgenden Beschreibung eines Ausführungsbeispiels anhand der **Zeichnungen.**

Es zeigen:
- Figur 1:: ein Ausführungsbeispiel eines erfindungsgemäßen Schutzelementes in Form einer B-Säule in einer Draufsicht und
- Figur 2:: eine Schnittdarstellung der B-Säule der Figur 1 entlang der Schnittebene A-A,
- Figuren 3 und 4:: ein erstes erfindungsgemäßes Verfahren zur Herstellung eines aus mehreren Einzelprofilen gebildeten Schutzelementes,
- Figuren 5 und 6:: ein zweites erfindungsgemäßes Verfahren zur Herstellung eines aus mehreren Einzelprofilen gebildeten Schutzelementes,
- Figuren 7 bis 9:: ein drittes erfindungsgemäßes Verfahren zur Herstellung eines aus mehreren Einzelprofilen gebildeten Schutzelementes,
- Figuren 10 bis 12:: ein viertes erfindungsgemäßes Verfahren zur Herstellung eines aus mehreren Einzelprofilen gebildeten Schutzelementes.

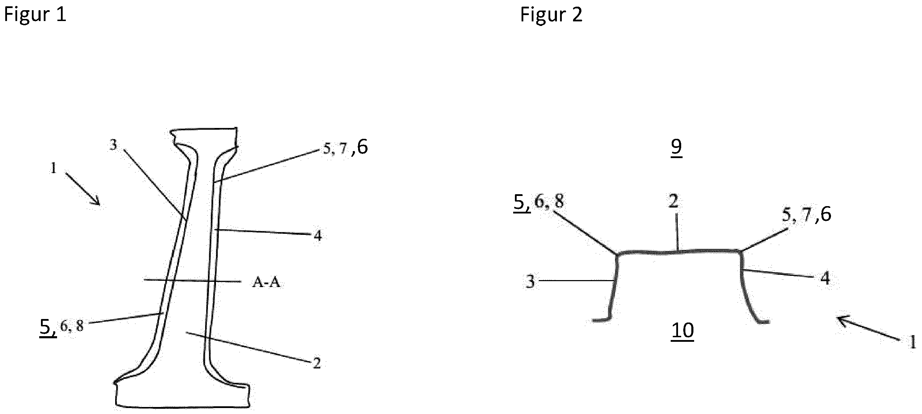

In den Figur 1 und 2 ist ein Ausführungsbeispiel eines erfindungsgemäßen Schutzelementes 1 in Form einer B-Säule in einer Draufsicht beziehungsweise einer Querschnittdarstellung gezeigt. Das Schutzelement 1 besteht dabei aus drei entsprechend vorgeformten ursprünglichen Einzelprofilen 2, 3 und 4. Die Einzelprofile 2, 3 und 4 sind nämlich bereits vor der Herstellung des Schutzelementes 1 bereits derart zugeschnitten und gebogen, dass sie zu einer Vorform des Schutzelementes 1 zusammenfügbar sind, ohne dass weitere Umformungen an den Einzelprofilen 2, 3 und 4 vorgenommen werden müssen.

Damit die Vorform des Schutzelementes 1 formstabil ist, werden das Einzelprofil 2 und das Einzelprofil 3 und das Einzelprofil 2 und das Einzelprofil 4 über jeweils zwei Schweißnähte 5 und 6 miteinander verbunden. Dabei liegt eine Schweißnaht 5 auf einer beschusszugewandten Seite 9 des Schutzelementes 1 und die andere Schweißnaht 6 auf einer beschussabgewandten Seite 10 des Schutzelementes 1. Als Schweißverfahren können hierbei insbesondere ein Laserschweißen, ein Plasmaschweißen, Lichtbogenschweißen oder ein Schutzgasschweißen mit Zusatzdraht verwendet werden, wobei der Zusatzdraht beim Schutzgasschweißen im Wesentlichen eine analoge Legierungszusammensetzung hat wie die Einzelprofile 2, 3 und 4.

Im vorliegenden Fall des als B-Säule ausgebildeten Schutzelementes 1 bestehen die Einzelprofile 2, 3 und 4 aus einem entsprechenden Stahl. Nachdem die drei Einzelprofile 2, 3 und 4 zu der Grundform des Schutzelementes 1 zusammengeschweißt wurden, wobei diese Grundform bereits die fertige Form der B-Säule aufweist, wird die Grundform des Schutzelementes 1 anschließend in ein gekühltes Warmformwerkzeug in einer Presse eingelegt und durch eine Wärmebehandlung mit anschließender Endformung zum fertigen als B-Säule ausgebildeten Schutzelement geformt. Bei der Umformung der Grundform des Schutzelementes 1 in dem Warmformungswerkzeug entstehen im Bereich der Schweißnähte 5 und 6 zwischen den Einzelprofilen 2 und 4 beziehungsweise 2 und 3 die scharf ausgebildeten Kanten 7 und 8. Dieses Umformen in der Presse entspricht im Wesentlichen einem Kalibrieren bzw. Biegen der durch das Schweißen eingebrachten Verzüge unter Ausbildung der Sollgeometrie und insbesondere der scharfen Kanten 7 und 8. Um das Schutzelement fertigzustellen, erfolgt abschließend in dem Warmformwerkzeug nach oder während des Endumformens ein Presshärten bei weiter geschlossenen Presswerkzeug. Unter Umständen kann das Werkzeug dabei auch in Kühlmedium getaucht bzw. damit geflutet werden und mehrmals leicht geöffnet und wieder geschlossen werden, um die Abkühlrate zu erhöhen und die Kühlzeit und damit Pressenbelegungszeit zu minimieren.

Wie insbesondere der Schnittdarstellung der Figur 2 entlang der Schnittebene A-A der Figur 1 zu entnehmen ist, sind dabei die Einzelprofile 2 und 3 sowie die Einzelprofile 2 und 4 in etwa in einem rechten Winkel von 90° zueinander angeordnet. Durch das Herstellungsverfahren können dabei unter Verzicht auf Biegeumformungen und somit unter Verzicht auf materialschwächende Biegeradien Schutzelemente 1 hergestellt werden, die in ihrem Verbindungsbereich der Schweißnähte 5 und 6 scharfe Kanten 7 und 8 ausbilden. Diese scharfen Kanten 7 und 8 sind dabei deutlich besser zur Verwendung in derartigen Schutzelementen 1 geeignet als Biegeradien, die bei den aus dem Stand der Technik bekannten Biegeumformungen entstehen, und bieten somit einen deutlich wirkungsvolleren Schutz gegen ballistische Einwirkungen und Detonationen.

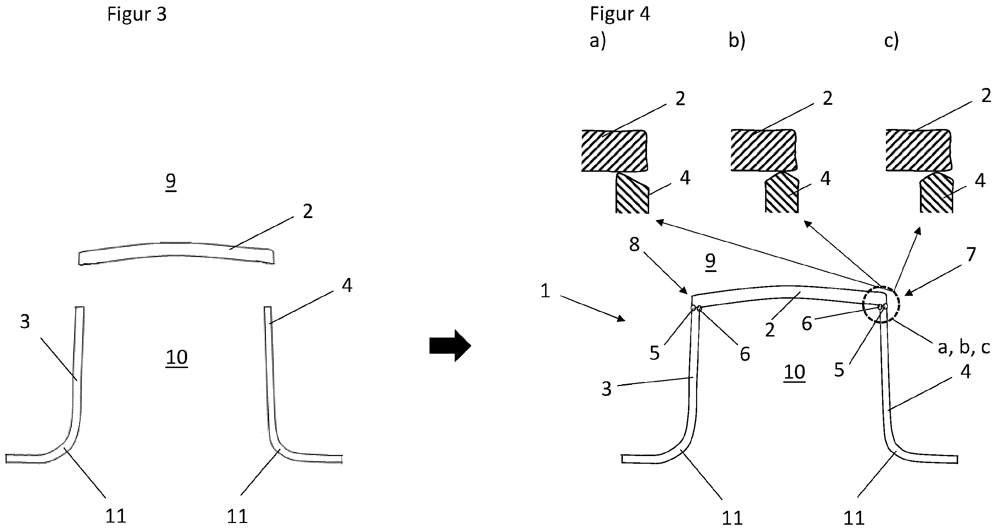

In den Figuren 3 und 4 wird ein erstes Ausführungsbeispiel des Verfahrens zur Herstellung eines erfindungsgemäßen Schutzelementes 1 gezeigt. Das dortige Schutzelement 1, wie es in Figur 4 dargestellt ist, wird dabei aus Einzelprofilen 2, 3 und 4 hergestellt. Zur Herstellung des Schutzelementes 1 werden dabei zuallererst die Einzelprofile 2, 3 und 4 bereitgestellt. Die beiden Einzelprofile 3 und 4 weisen dabei eine Biegung mit einen Biegeradius 11 auf, der größer ist als die doppelte Dicke der Einzelprofile 3 und 4. Das weitere Einzelprofil 2 wird nunmehr an seinen Enden mit jeweils einem der Einzelprofile 3 und 4 zu einer Vorform durch Schutzelemente 1 unter Bildung wenigstens einer Schweißnaht 5 auf einer beschusszugewandten Seite 9 der Einzelprofile 2, 3 und 4 und wenigstens einer Schweißnaht 6 auf der beschussabgewandten Seite 10 der Einzelprofile 2, 3 und 4 verschweißt.

Dabei werden die Einzelprofile 3 und 4 in ihren Endbereichen zum Einzelprofil 2 hin mit angefasten Kanten bereitgestellt, so wie es in den Detaildarstellungen a), b) und c) der Figur 4 gezeigt ist. Das Anfasen kann dabei vor einem oder während einem Warmformen der Einzelprofile 3 und 4 erfolgen. Die so angefasten Einzelprofile 3 und 4 werden nun auf das Einzelprofil 2 in dessen Endbereich aufgesetzt, so wie es in den Detaildarstellungen a), b) und c) der Figur 4 gezeigt ist. Danach erfolgt das Verschweißen der Einzelprofile 3 und 4 mit dem Einzelprofil 2. Es wird jeweils eine beschussseitige Schweißnaht 5 auf der beschusszugewandten Seite 9 der Einzelprofile 2, 3 und 4 sowie eine Schweißnaht 6 auf der beschussabgewandten Seite 10 der Einzelprofile 2, 3 und 4 unter Bildung von Kanten 7 und 8 erzeugt. Das Verschweißen kann dabei mit gleichen oder verschiedenen Schweißzusatzstoffen für beide der Schweißnähte 5 und 6 erfolgen. Wesentlich dabei ist nur, dass die der beschusszugewandten Schweißnaht 5 eine größere Härte aufweist als die Schweißnaht 6 auf der beschussabgewandten Seite 10 der Einzelprofile 2, 3 und 4.

Nachdem das Verschweißen der Einzelprofile 2, 3 und 4 unter Bildung der Schweißnähte 5 und 6 stattgefunden hat, wird die so erhaltene Vorform des Schutzelementes 1 in ein Warmformwerkzeug eingelegt, in dem ein Endumformen der Vorform zu dem Schutzelement 1 in dem Warmformwerkzeug erfolgt. Nachdem das Endumformen in dem Warmformwerkzeug der Vorform zu dem Schutzelement 1 stattgefunden hat, erfolgt abschließend ein Härten des Schutzelementes 1. Dazu wird die Vorform des Schutzelementes 1 vor dem Umformen zum Schutzelement 1 auf Austenitisierungstemperatur erwärmt und abschließend vergütet, wobei dieses Vergüten in dem gekühlten Warmformwerkzeug nach oder während des Endumformens durch Warmformen und Presshärten erfolgt.

Das in den Figuren 3 und 4 dargestellte Schutzelement 1 stellt ebenfalls eine B-Säule eines Kraftfahrzeuges dar.

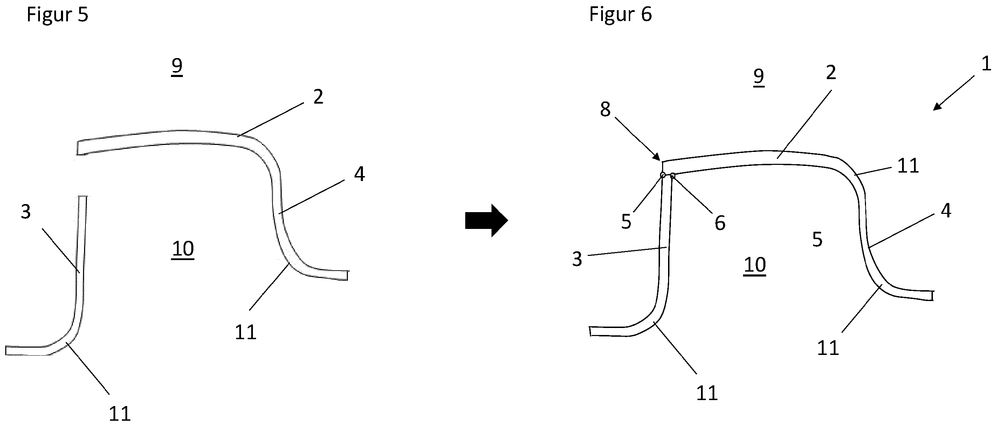

Die Figuren 5 und 6 stellen ein weiteres Ausführungsbeispiel des erfindungsgemäßen Verfahrens zur Herstellung eines Schutzelementes 1 in Form einer B-Säule dar. Allerdings werden dabei nur zwei Einzelprofile 2 und 3 entsprechend Figur 5 miteinander verbunden. Dabei ist das Einzelprofil 2 mit zwei Biegungen versehen, die einen Biegeradius 11 aufweisen, der größer ist als die doppelte Wandstärke des Einzelprofils 2. Die Biegungen sind dabei derart ausgestaltet, dass sich das Einzelprofil 2 nach der Biegung um ca. 90°gebogen weiter erstreckt. Das Einzelprofil 2 dieses Ausführungsbeispiels entspricht dabei einer Kombination der Einzelprofile 2 und 4 des Ausführungsbeispiels der Figuren 3 und 4. Auch das Einzelprofil 3 weist eine Biegung mit einem Biegeradius 11 auf, der größer ist als die doppelte Wandstärke des Einzelprofils 3.

In der Figur 6 ist nun das Einzelprofil 3 bereits mit dem Einzelprofil 2 unter Bildung der beiden Schweißnähte 5 und 6 miteinander verbunden. Auch hat bereits das abschließende Umformen und Vergüten unter Ausbildung der Kante 8 stattgefunden. Das Umformen und Vergüten erfolgte ebenfalls bereits entsprechend der Verfahrensweise, wie sie zu dem Ausführungsbeispiel der Figuren 3 und 4 beschrieben ist. Das Verschweißen kann dabei mit gleichen oder verschiedenen Schweißzusatzstoffen für beide der Schweißnähte 5 und 6 erfolgen. Wesentlich dabei ist nur, dass die der beschusszugewandten Schweißnaht 5 eine größere Härte aufweist als die Schweißnaht 6 auf der beschussabgewandten Seite 10 der Einzelprofile 2, 3 und 4.

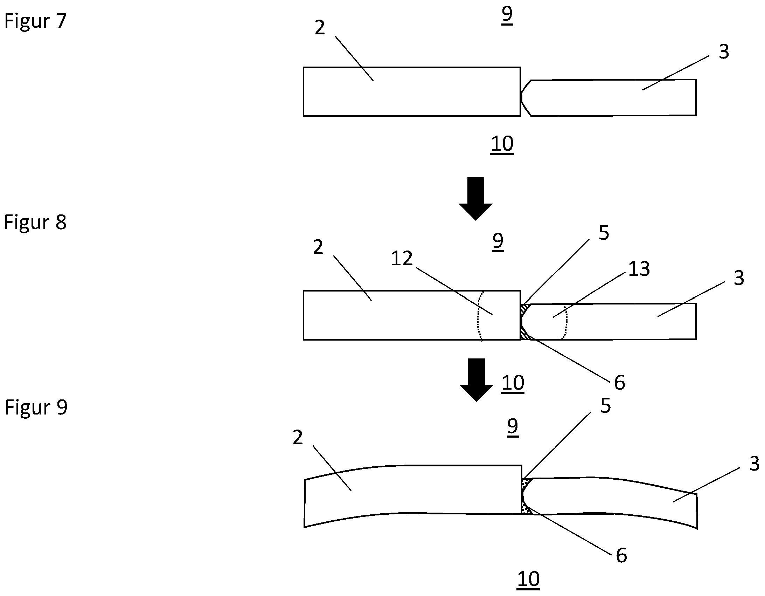

In den Figuren 7 bis 9 ist ein drittes Ausführungsbeispiel zur Herstellung eines erfindungsgemäßen Schutzelementes dargestellt. Dabei werden zwei Einzelprofile 2, 3 zu einem Schutzelement 1 verbunden. Im ersten Verfahrensschritt, der in Figur 7 dargestellt ist, wird das Einzelprofil 3 mit einem angefasten Ende bereitgestellt und an das ebenfalls bereitgestellte Einzelprofil 2 angelegt.

In dem in Figur 8 dargestellten weiteren Verfahrensschritt werden nunmehr die Einzelprofile 2 und 3 unter Ausbildung von Schweißnähten 5 und 6 miteinander verbunden. Dabei liegt die Schweißnaht 5 wieder auf der Beschuss zugewandten Seite 9, während die Schweißnaht 10 auf der Beschuss abgewandten Seite 10 abgeordnet ist. Das Verschweißen der beiden Einzelprofile 2 und 3 unter Ausbildung der Schweißnähte 5 und 6 kann dabei wieder mit gleichen oder auch unterschiedlichen Schweißzusatzstoffen erfolgen. Wesentlich hierbei ist allerdings, dass beim Verschweißen innerhalb der Einzelprofile 2 und 3 im Bereich der Schweißnähte 5 und 6 Wärmeeinflusszonen 12 und 13 entstehen, in denen die Beschusssicherheit und somit die Schutzwirkung reduziert wären.

Diese Wärmeeinflusszonen, mit verringerter Schutzwirkung werden durch das abschließende Vergüten durch Warmumformen und Härten, wieder gehärtet, sodass ein Schutzelement 1, wie es in Figur 9 dargestellt ist entsteht, bei welchem die Wärmeeinflusszonen 12 und 13 mit verminderter Schutzwirkung durch das Vergüten bzw. Härten wieder entfernt beziehungsweise maximal reduziert wurden.

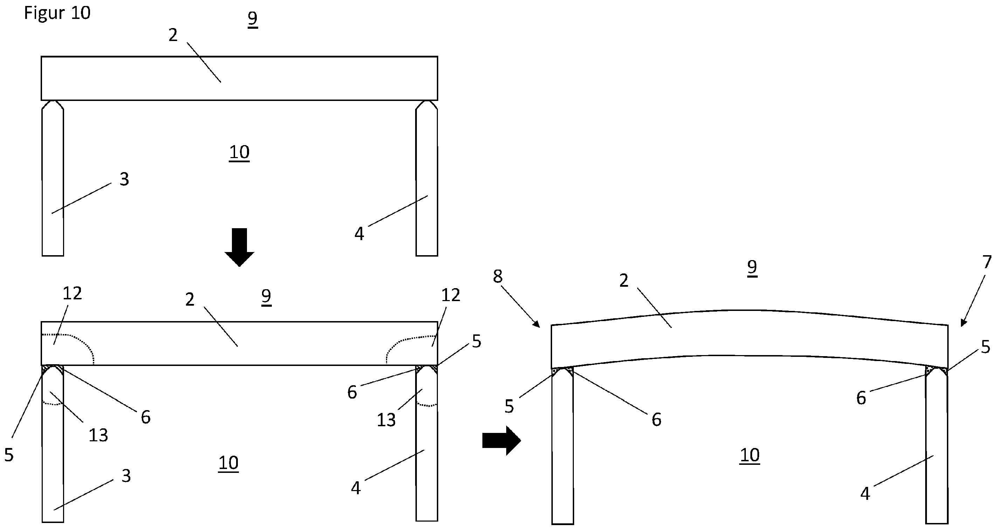

In gleicher Weise ist in der Figur 10 ein viertes erfindungsgemäßes Verfahren, analog zu dem in den Figuren 7 bis 9 gezeigten Verfahren, dargestellt, wobei das dortige in Figur 12 gezeigte Schutzelement 1 aus drei Einzelprofilen 2, 3 und 4 hergestellt wurde. Das Schutzelement 1 dieses Ausführungsbeispiels kann dabei wieder als B-Säule eines Kraftfahrzeugs ausgebildet sein.

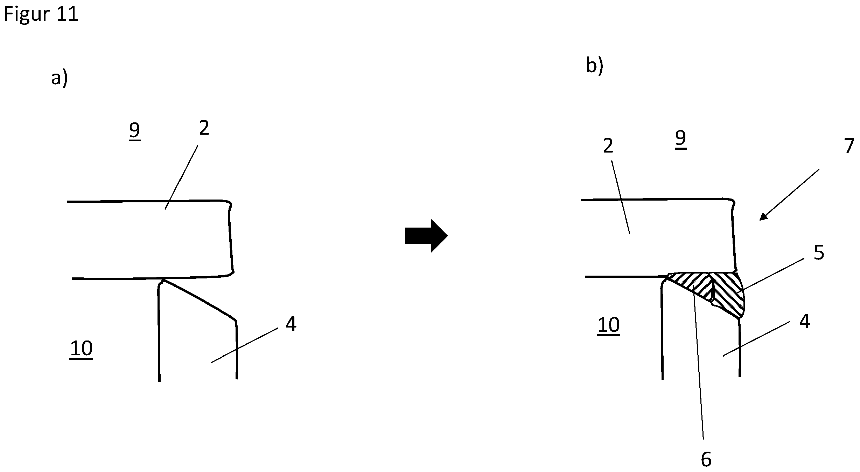

Wie in der Figur 10 gezeigt, sind die dortigen Einzelprofile 3 und 4 an ihrem zum weiteren Einzelprofil 2 weisenden Ende angefast und werden im weiteren Verfahrensschritt - wie er in Figur 11 dargestellt ist unter Ausbildung von Schweißnähten 5 und 6 und Wärmeeinflusszonen 12 und 13 miteinander verbunden. Das Verschweißen kann dabei auch hier mit gleichen oder verschiedenen Schweißzusatzstoffen für beide der Schweißnähte 5 und 6 erfolgen. Wesentlich dabei ist nur, dass die der beschusszugewandten Schweißnaht 5 eine größere Härte aufweist als die Schweißnaht 6 auf der beschussabgewandten Seite 10 der Einzelprofile 2, 3 und 4. Um die Wärmeeinflusszonen 12 und 13 wieder zu minimieren, wird in einem abschließenden Verfahrensschritt nach oder während dem Warmumformen in einem Warmformwerkzeug wieder ein Vergüten durchgeführt. Dieses Vergüten erfolgt wieder unter Warmformen und Pressformen innerhalb des Warmformwerkzeuges nach oder während des Endumformens der Vorform zu dem Schutzelement 1.

Figur 11 zeigt eine weiteres Ausführungsform. Hier ist anstelle einer Schweißnaht auf beschussabgewandter Seite 10 und einer Schweißnaht auf beschusszugewandter Seite 9 nur ein Schweißbereich ausgebildet, welcher zweilagig ausgeführt ist in Form einer beschusszugewandten, äußeren Schweißnaht 5 und einer beschussabgewandten, inneren Schweißnaht 6. Beide Schweißnähte 5 und 6 des Schweißbereichs sind im Spalt zwischen benachbarten Einzelprofilen 2 und 4 ausgebildet innerhalb einer Fase einer der Einzelprofile 4, wie sie auch schon in Figur 4a beschrieben ist. Die innere Schweißnaht 6 weist eine höhere Duktilität und niedrigere Härte und Festigkeit als die äußere Schweißnaht 5 auf. Das bereits zuvor zu den bereits beschriebenen Ausführungsbeispielen bzgl. der verschiedenen Schweißnähte 5 und 6 und entsprechend verschiedenen Schweißzusatzstoffen Gesagte gilt entsprechend auch für dieses Ausführungsbeispiel. Vorteil hier ist zudem, dass eine einseitige Zugänglichkeit beim Verschweißen der Einzelprofile 2 und 4 und damit beim Erstellen der Vorform ausreicht, was unter Umständen größere Freiheitsgrade beim Bauteildesign sowie weniger Vorrichtung- und Handlingaufwand in der Produktion bedeuten kann.

### Bezugszeichenliste

- 1: Schutzelement
- 2: Einzelprofil
- 3: Einzelprofil
- 4: Einzelprofil
- 5: Schweißnaht
- 6: Schweißnaht
- 7: Kante
- 8: Kante
- 9: Seite
- 10: Seite
- 11: Biegeradius
- 12 A-A: Wärmeeinflusszone
- 13: Wärmeeinflusszone Schnittebene

## Patentansprüche

1. Verfahren zur Herstellung eines aus mehreren Einzelprofilen (2, 3, 4) gebildeten Schutzelementes (1) zur Panzerung eines Kraftfahrzeugs, bei dem wenigstens zwei der Einzelprofile (2, 3, 4) benachbart zueinander angeordnet sind, mit folgenden Verfahrensschritte:
a) Bereitstellen der Einzelprofile (2, 3, 4) aus einer gleichen Stahllegierung oder aus verschiedenen Stahllegierungen,
b) Verschweißen der Einzelprofile (2, 3, 4) zu einer Vorform des Schutzelementes (1)
c) Erwärmen der Vorform auf eine Temperatur, die höher ist als die Austenitisierungstemperatur der Stahllegierung mit der höheren Austenitisierungstemperatur,
d) Einlegen der Vorform in ein Warmformwerkzeug,
e) Endumformen der Vorform zu dem Schutzelement (1) in dem Warmformwerkzeug, wobei das Schutzelement in einem abschließenden Verfahrensschritt in dem Warmformwerkzeug gehärtet wird,
**dadurch gekennzeichnet, dass** das Verschweißen in Schritt b) unter Bildung wenigstens einer ersten Schweißnaht (6) und einer zweiten Schweißnaht (5) erfolgt, wobei die erste Schweißnaht (6) weiter entfernt von einer beschusszugewandten Seite (9) der Einzelprofile (2, 3, 4) liegt als die zweite Schweißnaht (5), wobei beim Schweißen der näher an der beschusszugewandten Seite (9) der Einzelprofile (2, 3, 4) liegenden wenigstens einen Schweißnaht (5) ein Schweißzusatzstoff verwendet wird, der eine höhere Härte aufweist als ein Schweißzusatzstoff, der beim Schweißen der wenigstens einen Schweißnaht (6) verwendetet wird, die weiter weg von der beschusszugewandten Seite (9) der Einzelprofile (2, 3, 4) liegt.

2. Verfahren nach Anspruch 1, **dadurch gekennzeichnet, dass** das Verschweißen der Einzelprofile (2, 3, 4) zu einer Vorform des Schutzelementes (1) unter Bildung wenigstens einer Schweißnaht (5) auf der beschusszugewandten Seite (9) der Einzelprofile (2, 3, 4) und wenigstens einer Schweißnaht (6) auf der beschussabgewandten Seite (10) der Einzelprofile (2, 3, 4),

3. Verfahren nach Anspruch 1, **dadurch gekennzeichnet, dass** das Verschweißen der Einzelprofile (2, 3, 4) zu einer Vorform des Schutzelementes (1) unter Bildung der beiden Schweißnähte (5, 6) auf der beschusszugewandten Seite (9) der Einzelprofile (2, 3, 4) oder auf der beschussabgewandten Seite (10) der Einzelprofile (2, 3, 4) erfolgt

4. Verfahren nach einem der vorhergehenden Ansprüche, **dadurch gekennzeichnet, dass** beim Schweißen und Ausbilden der Schweißnähte (5, 6) wenigstens ein Schweißzusatzstoff austenitisch ist.

5. Verfahren nach einem der vorhergehenden Ansprüche, **dadurch gekennzeichnet, dass** beim Schweißen der Schweißnaht (5) auf der beschusszugewandten Seite (9) der Einzelprofile (2, 3, 4) ein Schweißzusatzstoff verwendet wird, der eine Härte von größer als 550 HV aufweist.

6. Verfahren nach einem der vorhergehenden Ansprüche, **dadurch gekennzeichnet, dass** miteinander zu verschweißende Einzelprofile (2, 3, 4) vor dem Verschweißen im Bereich der zu bildenden Schweißnähte (5, 6) in einem Winkel ungleich 180° angeordnet werden.

7. Verfahren nach einem der vorhergehenden Ansprüche, **dadurch gekennzeichnet, dass**, die Einzelprofile (2, 3, 4) als warmgeformte, pressgehärtete Profile bereitgestellt werden.

8. Verfahren nach einem der vorhergehenden Ansprüche, **dadurch gekennzeichnet, dass** wenigstens ein Einzelprofil (2, 3, 4) mit einen Biegeradius (11) bereitgestellt wird, der größer ist als die doppelte Wandstärke des Einzelprofils (2, 3, 4).

9. Verfahren nach einem der vorhergehenden Ansprüche, **dadurch gekennzeichnet, dass** die Einzelprofile (2, 3, 4) aus Stahlblechen, insbesondere walzharten Stahlblechen, oder aus gehärteten Stahlblechen bereitgestellt werden.

10. Verfahren nach einem der vorhergehenden Ansprüche, **dadurch gekennzeichnet, dass** bei dem Endumformen eine Umformung der Vorform des Schutzelementes (1) im Bereich der Schweißnähte (5, 6) und gegebenenfalls den Schweißnähten (5, 6) direkt benachbarten Bereichen unter Beibehaltung von scharfen Kanten (7, 8) stattfindet.

11. Verfahren nach einem der vorhergehenden Ansprüche, **dadurch gekennzeichnet, dass** als Schutzelement (1) eine A-, B- oder C-Säule, eine Stirnwand, ein Schweller, ein Radhaus, ein Fahrzeugdach, Fahrzeugtür, ein Fahrzeugboden, eine Luke, Sensorabdeckung, oder dergleichen hergestellt wird.

12. Verfahren nach einem der vorhergehenden Ansprüche, **dadurch gekennzeichnet, dass** beim Endumformen der Vorform des Schutzelementes (1) zu dem Schutzelement (1) die Schweißnähte (5, 6) geringer umgeformt werden als die direkt angrenzenden Bereiche der Einzelprofile (2, 3, 4).

13. Schutzelement (1) für ein Kraftfahrzeug hergestellt nach einem der vorhergehenden Ansprüche, **dadurch gekennzeichnet, dass** die Härte der auf der näher an der beschusszugewandten Seite (9) der Einzelprofile (2, 3, 4) liegenden Schweißnaht (5) größer ist als die Härte der näher an der beschussabgewandten Seite (10) der Einzelprofile (2, 3, 4) liegenden Schweißnaht (6), wobei die Härte der näher an der beschusszugewandten Seite (9) der Einzelprofile (2, 3, 4) liegenden Schweißnaht (5) und die Härte der ursprünglichen Einzelprofile (2, 3, 4) um nicht mehr als 25% variieren, wobei die Härte der näher an der beschusszugewandten Seite (9) der Einzelprofile (2, 3, 4) liegenden Schweißnaht (5) mindestens 550HV beträgt.

## Claims

1. Method for producing a protective element (1) formed from a plurality of individual profiles (2, 3, 4) for armouring a motor vehicle, in which at least two of the individual profiles (2, 3, 4) are arranged adjacent to one another, comprising the following method steps:
a) providing the individual profiles (2, 3, 4) from the same steel alloy or from different steel alloys,
b) welding the individual profiles (2, 3, 4) to form a preform of the protective element (1)
c) heating the preform to a temperature higher than the austenitising temperature of the steel alloy with the higher austenitising temperature,
d) inserting the preform into a hot forming tool,
e) final-forming the preform into the protective element (1) in the hot forming tool, wherein the protective element is hardened in the hot forming tool in a final method step,
**characterised in that** the welding in step b) takes place with forming of at least a first weld seam (6) and a second weld seam (5), wherein the first weld seam (6) is further remote from a side (9) of the individual profiles (2, 3, 4) facing the projectile than the second weld seam (5), wherein, when welding the at least one weld seam (5), which is located closer to the side (9) of the individual profiles (2, 3, 4) facing the projectile, a welding filler material is used which has a higher hardness than a welding filler material which is used when welding the at least one weld seam (6) which is further remote from the side (9) of the individual profiles (2, 3, 4) facing the projectile.

2. Method according to claim 1, **characterised in that** the welding of the individual profiles (2, 3, 4) to form a preform of the protective element (1) with the forming of at least one weld seam (5) on the side (9) of the individual profiles (2, 3, 4) facing the projectile and at least one weld seam (6) on the side (10) of the individual profiles (2, 3, 4) facing away from the projectile,

3. Method according to claim 1, **characterised in that** the welding of the individual profiles (2, 3, 4) to form a preform of the protective element (1) takes place with the forming of the two weld seams (5, 6) on the side (9) of the individual profiles (2, 3, 4) facing the projectile or on the side (10) of the individual profiles (2, 3, 4) facing away from the projectile

4. Method according to any one of the preceding claims, **characterised in that**, during welding and forming of the weld seams (5, 6), at least one welding filler material is austenitic.

5. Method according to any one of the preceding claims, **characterised in that**, during welding of the weld seam (5) on the side (9) of the individual profiles (2, 3, 4) facing the projectile, a welding filler material is used which has a hardness of greater than 550HV.

6. Method according to any one of the preceding claims, **characterised in that** individual profiles (2, 3, 4) to be welded together are arranged at an angle other than 180° in the region of the weld seams (5, 6) to be formed before welding.

7. Method according to any one of the preceding claims, **characterised in that** the individual profiles (2, 3, 4) are provided as hot-formed, press-hardened profiles.

8. Method according to any one of the preceding claims, **characterised in that** at least one individual profile (2, 3, 4) is provided with a bending radius (11) which is greater than twice the wall thickness of the individual profile (2, 3, 4).

9. Method according to any one of the preceding claims, **characterised in that** the individual profiles (2, 3, 4) are provided from steel sheets, in particular rolled steel sheets, or from hardened steel sheets.

10. Method according to any one of the preceding claims, **characterised in that**, during the final forming, the preform of the protective element (1) is formed in the region of the weld seams (5, 6) and, if necessary, in the regions directly adjacent to the weld seams (5, 6) while maintaining sharp edges (7, 8).

11. Method according to any one of the preceding claims, **characterised in that** an A-, B- or C-pillar, a front wall, a sill, a wheel arch, a vehicle roof, a vehicle door, a vehicle floor, a hatch, a sensor cover, or the like is produced as the protective element (1).

12. Method according to any one of the preceding claims, **characterised in that**, during the final forming of the preform of the protective element (1) into the protective element (1), the weld seams (5, 6) are formed to a lesser extent than the directly adjoining regions of the individual profiles (2, 3, 4).

13. Protective element (1) for a motor vehicle produced according to any one of the preceding claims, **characterised in that** the hardness of the weld seam (5) located closer to the side (9) of the individual profiles (2, 3, 4) facing the projectile is greater than the hardness of the weld seam (6) located closer to the side (10) of the individual profiles (2, 3, 4) facing away from the projectile, wherein the hardness of the weld seam (5) located closer to the side (9) of the individual profiles (2, 3, 4) facing the projectile and the hardness of the original individual profiles (2, 3, 4) do not vary by more than 25%, wherein the hardness of the weld seam (5) located closer to the side (9) of the individual profiles (2, 3, 4) facing the projectile is at least 550HV.

## Revendications

1. Procédé de fabrication d'un élément de protection (1) formé de plusieurs profilés individuels (2, 3, 4) pour le blindage d'un véhicule à moteur, dans lequel au moins deux des profilés individuels (2, 3, 4) sont agencés de manière adjacente l'un à l'autre, comprenant les étapes de procédé suivantes :
a) la mise à disposition des profilés individuels (2, 3, 4) composés d'un même alliage d'acier ou d'alliages d'acier différents,
b) le soudage des profilés individuels (2, 3, 4) en une préforme de l'élément de protection (1)
c) le chauffage de la préforme à une température qui est supérieure à la température d'austénitisation de l'alliage d'acier présentant la température d'austénitisation la plus élevée,
d) la mise en place de la préforme dans un outil de formage à chaud,
e) le formage final de la préforme en l'élément de protection (1) dans l'outil de formage à chaud, dans lequel l'élément de protection est durci dans l'outil de formage à chaud au cours d'une étape finale de procédé,
**caractérisé en ce que** le soudage à l'étape b) s'effectue en formant au moins un premier cordon de soudure (6) et un deuxième cordon de soudure (5),
dans lequel le premier cordon de soudure (6) est plus éloigné d'un côté (9) des profilés individuels (2, 3, 4) côté exposé aux impacts que le deuxième cordon de soudure (5),
dans lequel lors du soudage dudit au moins un cordon de soudure (5) se trouvant sur le côté (9) des profilés individuels (2, 3, 4) exposé aux impacts, il est utilisé un matériau d'apport présentant une dureté supérieure à celle d'un matériau d'apport utilisé lors du soudage dudit au moins un cordon de soudure (6) situé de façon plus éloignée du côté (9) des profilés individuels (2, 3, 4) exposé aux impacts.

2. Procédé selon la revendication 1, **caractérisé en ce que** le soudage des profilés individuels (2, 3, 4) en une préforme de l'élément de protection (1) en formant au moins un cordon de soudure (5) sur le côté (9) des profilés individuels (2, 3, 4) exposé aux impacts et au moins un cordon de soudure (6) situé sur le côté (10) des profilés individuels (2, 3, 4) opposé aux impacts.

3. Procédé selon la revendication 1, **caractérisé en ce que** le soudage des profilés individuels (2, 3, 4) en une préforme de l'élément de protection (1) s'effectue en formant les deux cordons de soudure (5, 6) sur le côté (9) des profilés individuels (2, 3, 4) exposé aux impacts ou sur le côté (10) des profilés individuels (2, 3, 4) opposé aux impacts

4. Procédé selon l'une quelconque des revendications précédentes, **caractérisé en ce que** lors du soudage et de la réalisation des cordons de soudure (5, 6) au moins un additif de soudage est austénitique.

5. Procédé selon l'une quelconque des revendications précédentes, **caractérisé en ce que**, lors du soudage du cordon de soudure (5) sur le côté (9) des profilés individuels (2, 3, 4) exposé aux impacts, un additif de soudage qui présente une dureté supérieure à 550HV est utilisé.

6. Procédé selon l'une quelconque des revendications précédentes, **caractérisé en ce que** les profilés individuels (2, 3, 4) à souder entre eux sont disposés avant le soudage dans la zone des cordons de soudure (5, 6) à former à un angle différent de 180°.

7. Procédé selon l'une quelconque des revendications précédentes, **caractérisé en ce que** les profilés individuels (2, 3, 4) sont mis à disposition sous forme de profilés formés à chaud, emboutis à chaud.

8. Procédé selon l'une quelconque des revendications précédentes, **caractérisé en ce qu'**au moins un profilé individuel (2, 3, 4) est mis à disposition avec un rayon de courbure (11) qui est supérieur au double de l'épaisseur de paroi du profilé individuel (2, 3, 4).

9. Procédé selon l'une quelconque des revendications précédentes, **caractérisé en ce que** les profilés individuels (2, 3, 4) composés de tôles d'acier, en particulier de tôles d'acier laminées dures, ou de tôles d'acier trempées sont mis à disposition.

10. Procédé selon l'une quelconque des revendications précédentes, **caractérisé en ce que**, lors du formage final, un formage de la préforme de l'élément de protection (1) a lieu dans la zone des cordons de soudure (5, 6) et, le cas échéant, des zones directement adjacentes aux cordons de soudure (5, 6) tout en conservant des arêtes vives (7, 8).

11. Procédé selon l'une quelconque des revendications précédentes, **caractérisé en ce qu'**un montant A, B ou C, un tablier, un bas de caisse, un passage de roue, un toit de véhicule, une porte de véhicule, un plancher de véhicule, une trappe, un cache de capteur ou similaire est fabriqué comme élément de protection (1).

12. Procédé selon l'une quelconque des revendications précédentes, **caractérisé en ce que**, lors du formage final de la préforme de l'élément de protection (1) en l'élément de protection (1), les cordons de soudure (5, 6) sont formés de manière plus petite que les zones directement adjacentes des profilés individuels (2, 3, 4).

13. Élément de protection (1) pour un véhicule à moteur fabriqué selon l'une quelconque des revendications précédentes, **caractérisé en ce que** la dureté du cordon de soudure (5) situé sur le côté (9) des profilés individuels (2, 3, 4) exposé aux impacts est supérieure à la dureté du cordon de soudure (6) situé sur le côté (10) des profilés individuels (2, 3, 4) opposé aux impacts, dans lequel la dureté du cordon de soudure (5) situé plus près du côté (9) des profilés individuels (2, 3, 4) exposé aux impacts et la dureté des profilés individuels (2, 3, 4) d'origine ne varie pas de plus de 25%, dans lequel la dureté du cordon de soudure (5) plus proche du côté (9) des profilés individuels (2, 3, 4) exposé aux impacts est d'au moins 550HV.
